# EUROPEAN PATENT APPLICATION

(11) **EP 2 343 840 A1**
(43) Date of publication of application: **13.07.2011**
(21) Application number: 11150497.3
(22) Date of filing: 10.01.2011
(51) Int. Cl.: H04B 10/148, H04J 14/02

(54) **Method, device and optical node for coherent reception of an optical signal**

(30) Priority: 12.01.2010 FR 1000102
(71) Applicant: Alcatel Lucent, 75007 Paris (FR)
(72) Inventor: Bertran Pardo, Oriol, 91620, NOZAY (FR); Renaudier, Jérémie, 91620, NOZAY (FR); Bigo, Sébastien, 91620, NOZAY (FR)
(74) Representative: Keseris, Denis

(57) **Abstract**

The present invention pertains to a method for retrieving at least one optical signal transmitted over a communication network comprising a plurality of transmission wavelength channels, said method using coherent detection and comprising the following steps:
- a coherent mixing of the optical signal transmitted over a transmission wavelength and a baseline signal emitted by at least one local oscillator,
- a sampling of the signals derived from the coherent mixing, comprising an analog-digital conversion,
- a digital signal processing,
wherein said a local oscillator comprises means for generating a frequency comb whose spectral lines correspond to the wavelength of the network's transmission channels in such a way that the reference signal comprises a spectral line corresponding to the transmission wavelengths channel of the transmitted signal.

## Description

The present invention pertains to the field of optical communication networks, and more particularly means for protecting the network's connections and for retrieving signals by coherent detection within the egress node's receiver.

In order to meet users' demands, the capacities of communication networks are constantly increasing. Nonetheless, as it is very expensive to completely change a network's technology, operators are seeking to develop higher-performing equipment which is compatible with already-installed and existing equipment.

The use of coherent detection, in combination with complex modulation formats, is a means for obtaining such compatibility.

Furthermore, in order to overcome any problems that may arise over a network connection, operators are installing optical protection paths which may be activated if there is a problem on the active optical path, i.e. the working path.

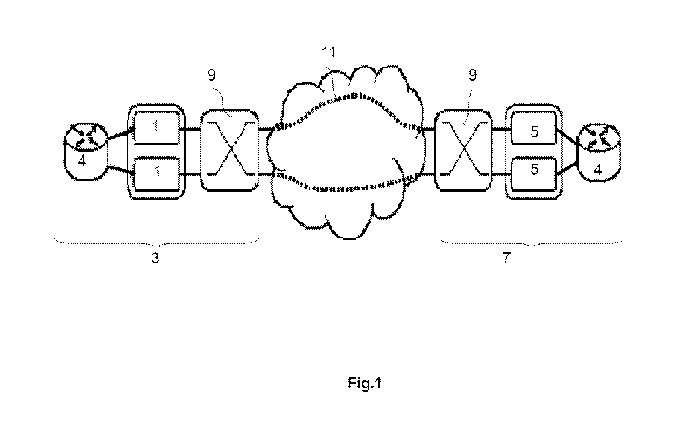

In the state of the art, two types of protection schemes exist:
First, there are electrical protection schemes, as depicted in Figure 1, in which all of the optical equipment of the transmitter 1 of the ingress node 3 connected to an electronic router 4 all the way to the receiver 5 of the egress node 7 connected to another electrical router 4, with optical cross-connects (OXCs) 9 and optical transmission means 11 along the way, are doubled. This solution is high-performance and makes it possible to activate the protection connection in a minimal amount of time (because the signals are received at two separate receivers 5), but it is very expensive because the equipment that is needed is doubled (in particular the transmitters 1 and optical receivers 5).

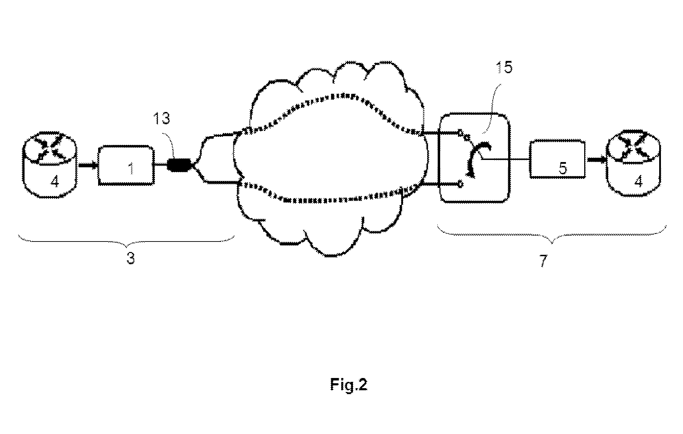

Second, there are optical protection schemes, as depicted in Figure 2, in which the output of the transmitter 1 is connected to an optical coupler 13 making it possible to split the signal, and wherein a switch 15 makes it possible to select the working path or protection path.

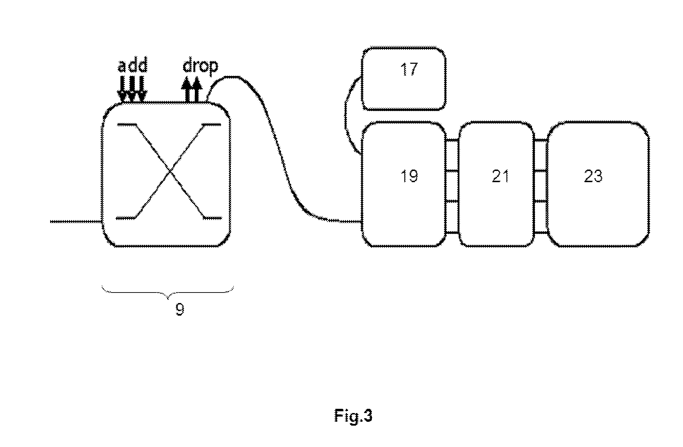

Nonetheless, if signals are detected using a coherent receiver, the signals associated with that technique are retrieved as described in Figure 3, in which the transmitted signal is mixed with a signal of a local oscillator 17 by a coherent mixer 19 so as to retrieve different components of the mixed signal, these components being transmitted to a sampler 21 and then to a digital signal processing device 23 in order to decode the information contained by the transmitted signal based on the retrieved components. However, this retrieval technique requires a local oscillator 17 producing a signal of approximately the same wavelength as the transmitted signal. Thus, switching the working path over to the protection path (which may correspond to a different wavelength) requires knowing the wavelength of the protection signal (generally predefined by the network's control plane) and tuning the local oscillator to the newly received wavelength. Thus, the time taken to set up the protection connection includes the time taken by the control plane to react, the sending of a command to the local oscillator 17 by the control plane, and the tuning of the local oscillator 17. This time is non-negligible, and leads to a significant loss of information whenever the bitrate is high.

The goal of the present invention is therefore to overcome the aforementioned drawbacks of the state of the art and to disclose a method for reducing the time taken to adapt the retrieval equipment when the wavelength of the transmitted signal varies, such as when a protection connection is set up.

The present invention pertains to a method for retrieving at least one optical signal transmitted over a communication network comprising a plurality of transmission wavelength channels, said method using coherent detection and comprising the following steps:
- a coherent mixing of the optical signal transmitted over a transmission wavelength and a baseline signal emitted by at least one local oscillator,
- a sampling of the signals derived from the coherent mixing, comprising an analog-digital conversion,
- a digital signal processing,
   wherein said local oscillator comprises means for generating a frequency comb whose spectral lines correspond to the wavelength of the network's transmission channels in such a way that the baseline signal comprises a spectral line corresponding to the transmission wavelengths channel of the transmitted signal.

According to another aspect of the present invention, the frequency comb generated by the local oscillator comprises spectral lines corresponding to only one part of the wavelengths of the network's transmission channels.

According to another embodiment of the present invention, the local oscillator is a laser with a Fabry-Pérot cavity.

According to an additional aspect of the present invention, the filtering inherent in the analog-digital converters makes it possible to retrieve the signal of the baseband corresponding to the beat of the transmitted signal and of the corresponding spectral line of the baseline signal.

The present invention also pertains to a method for receiving an optical signal transmitted over a communication network comprising a plurality of transmission wavelengths channels comprising the following steps:
- a filtering of the transmitted signal by a wavelength channel transmission filter,
- a retrieval of the signal according to the previously described retrieval method.

According to an additional aspect of the present invention, the wavelength channel transmission filter which selects the desired range of wavelengths is a wavelength-selective switch.

According to an additional aspect of the present invention, the wavelength channel transmission filter is located within an optical cross-connect located within a node of the network.

The invention also pertains to a device for retrieving an optical signal transmitted over a communication network comprising a plurality of transmission wavelengths channels, said device comprising:
- a local oscillator intended to produce a baseline optical signal,
- a coherent mixer comprising two inputs intended to receive both the transmitted optical signal and the baseline signal, and outputs intended to transmit components of the mixed signal,
- a sampler comprising photodiodes and analog-digital converters,
- a digital signal processing module,
wherein said local oscillator comprises means for generating a frequency comb whose spectral lines are within a predefined interval around the network's transmission channel wavelengths so as to produce a beat between the transmitted signal and the baseline signal within the coherent mixer.

The invention further pertains to an optical node of a protection optical device, comprising an active optical path and a protection optical path, said optical paths connecting an optical emitter and an optical receiver, said optical node comprising:
- means for switching the active optical path over to the protection optical path in the event of an incident on the active optical path.
- means for retrieving a transmitted signal, comprising:
- a local oscillator intended to produce a baseline optical signal,
- a coherent mixer comprising two inputs intended to receive both the signal transmitted by one of the optical paths and the baseline signal, and outputs intended to transmit components of the mixed signal,
- a sampler comprising photodiodes and analog-digital converters,
- a digital signal processing module,
wherein the local oscillator comprises means for generating a frequency comb whose spectral lines correspond to the wavelengths of the transmission channels of the active and protection paths, such that the baseline signal comprises a spectral line corresponding to the transmission wavelength channel of the signal transmitted by one of the optical paths.

According to another aspect of the present invention, the analog-digital converters comprise filtering means making it possible to select the signal of the baseband corresponding to the beat of the transmitted signal and of the corresponding spectral line of the baseline signal.

Other characteristics and benefits of the invention will become apparent from the following description, given with reference to the attached drawings, which by way of a nonlimiting example depict one possible embodiment.

In these drawings:
- Figure **1** depicts an electrical protection diagram;
- Figure **2** depicts an optical protection diagram;
- Figure **3** depicts a diagram of a coherent demodulation device according to the state of the art;
- Figure **4** detects a diagram of a spectral representation of a frequency comb,
- Figure **5** depicts a power diagram based on the wavelength of a signal derived from a Fabry-Perot laser comprising a plurality of modes;
- Figure **6** depicts two examples of interaction, within a coherent mixer, between a received signal and the signal from a local oscillator comprising a spectral line at a frequency near the frequency of the received signal;
- Figure **7** depicts one example of the transfer function of an analog-digital converter; and
- Figure **8** depicts two examples of interaction, within a coherent mixer, between a received signal and the signal from a local oscillator comprising a frequency comb wherein one of the spectral lines has a frequency near the frequency of the received signal.

The embodiments of the present invention pertain to a method for receiving and retrieving an optical signal transmitted over an optical network on a transmission wavelength channel, said method using coherent demodulation and a local oscillator emitting a frequency comb whose spectral lines correspond to the wavelengths of channels likely to correspond to the transmission wavelength channel of the signal transmitted to the retrieval device.

As described above, the signals sent by the optical cross-connects 9 to the receiver 5 may correspond to different transmission wavelength channels having different wavelengths.

By emitting, from the local oscillator, a baseline signal comprising a frequency comb corresponding to the frequencies of the transmission wavelength channels, the embodiments of the present invention ensure that one of the spectral lines emitted by the local oscillator will correspond to the wavelength of the transmitted signal.

Thus, a coherent mixer 19 receives both the transmitted signal and a frequency comb wherein one of the lines corresponds to the wavelength of the transmitted signal.

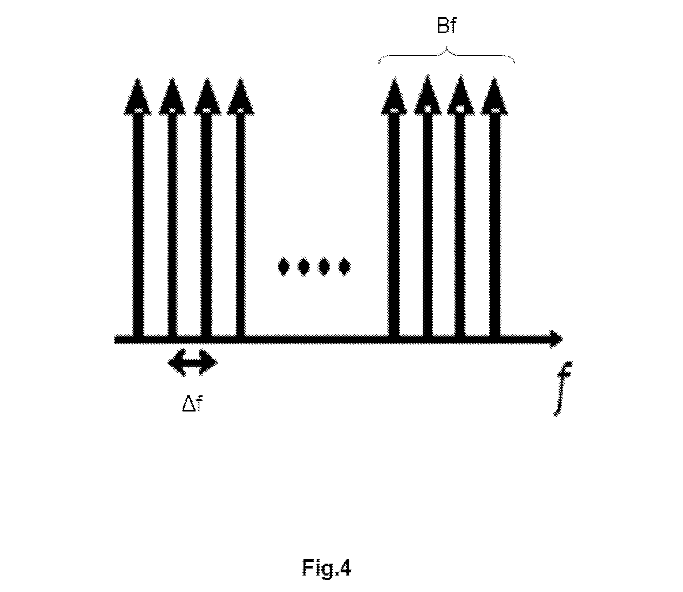

In practice, the network's transmission wavelengths channels correspond to a set of frequencies separated by an optical interval Δf, for example 50 GHz as depicted in Figure 4.

An optical receiver 5 may receive signals transmitted across all of the transmission wavelengths channels or only some of these wavelength channels corresponding, for example, to a frequency band Bf that depends on the network's configuration. Thus, the local oscillator emits a frequency comb wherein the spectral lines correspond to the frequencies of the wavelength channels within the desired frequency band Bf.

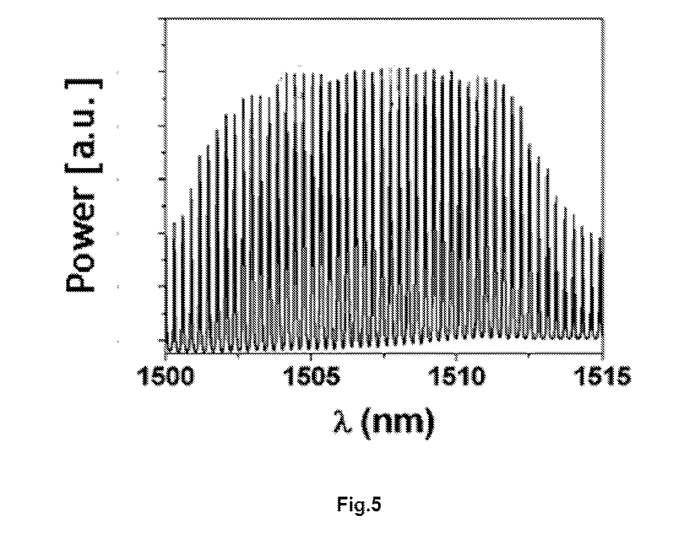

Figure 5 depicts an example frequency comb obtained with a Fabry-Pérot laser. Nonetheless, other solutions, such as the use of a modulator, may also be used to produce a frequency comb that has an optical interval defined between the various spectral lines.

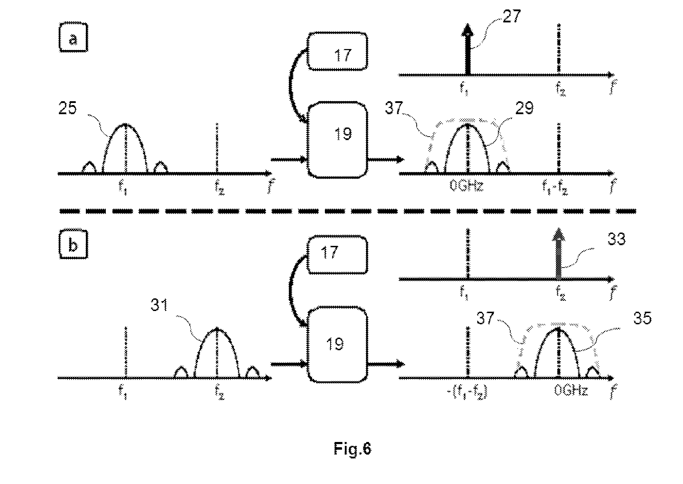

The transmission of a baseline signal by a local oscillator at a frequency near the frequency of the received signal makes it possible to produce a beat between the two signals in order to obtain a baseband signal, meaning one centered around the null frequency as depicted in Figure 6. In section a), a signal 25 is received over the frequency wavelength channel f1. If the local oscillator produces a signal 27 at the frequency f1 (in reality at a frequency near f1), the beat between the two signals produces a baseband signal 29. Likewise, in section b), a signal 31 is received over a frequency transmission wavelength channel f2. If the local oscillator produces a signal 33 at the frequency f2, the beat between the two signals produces a baseband signal 35.

In one embodiment, the coherent receiver 19 selects one component of the transmitted optical signal (25, 31) whose polarization state corresponds to a polarization state used by the optical transmitter 1.

In one preferential embodiment, the coherent receiver is a polarization diversity receiver. To achieve this, a polarization splitter may be provided to separate the received optical signal into two components exhibiting orthogonal polarization states. Each polarized component may be subjected to separate coherent detection, with the help of a similarly polarized local oscillator. To achieve this, two similar coherent mixers may be provided, so that four detection signals are ultimately produced, respectively representing the phase and quadrature components of the first polarized component, and the phase and quadrature components of the second polarized component. This embodiment of the coherent receiver may particularly be used in combination with a polarization-multiplexed transmitter.

Furthermore, as described in Figure 3, these signals are then transmitted to a sampler 21, within which the signal is converted by analog-digital converters.

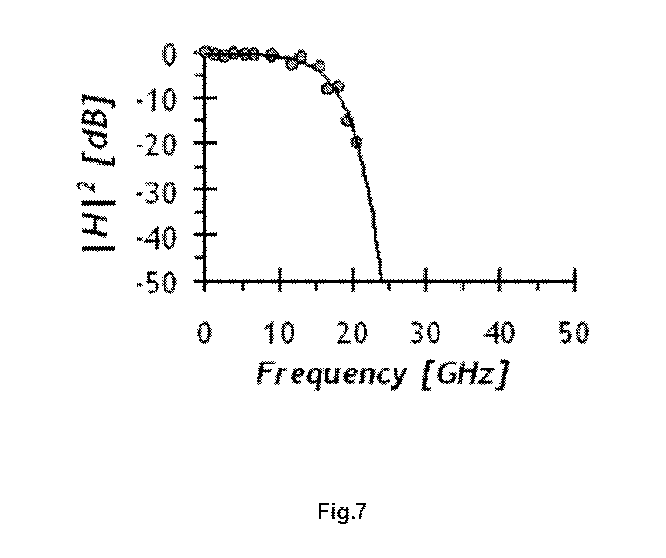

However, these converters have limited bandwidth, which acts as a low-pass filter for the converted signals. Figure 7 depicts an example frequency response of an analog-digital converter with a bandwidth of 16 GHz at -3dB.

This filtering of analog-digital converters therefore automatically selects the baseband as depicted in Figure 6 by the envelope 37 corresponding to that filtering.

Additionally, if the bandwidth of the analog-digital converters is too wide compared to the bandwidth of the transmission wavelength channel, the baseband filtering may be carried out by an electrical low-pass filter placed between the photodiodes and the analog-digital converters.

Thus, by emitting a frequency comb whose spectral lines correspond to the network's transmission wavelength channels, regardless of the transmission wavelength channel on which the signal will be received, there will be a line at the corresponding wavelength whose beat with the received signal will produce a baseband signal.

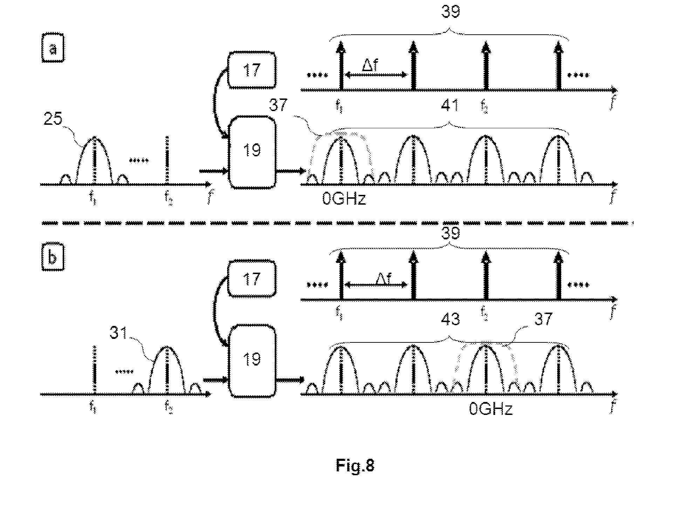

We therefore return to the previous example with a local oscillator emitting a frequency comb as depicted in Figure 8. The signal 25 received on a wavelength channel with the frequency f1 is mixed with the signal 39 derived from the local oscillator and made up of a plurality of spectral lines, one of which has a frequency f1. Afterward, mixing will produce a signal 41 corresponding to the interaction of the various spectral lines with the signal 25. The interaction with the spectral line corresponding to f1 produces a baseband signal.

Likewise, whenever the received signal 31 corresponding to the wavelength channel with the frequency f2 is mixed with the signal 39 derived from the local oscillator, the interaction produces a signal 43 and the interaction with the spectral line corresponding to f2 will produce a baseband signal.

Consequently, regardless of the transmission wavelengths channel that is used, a spectral line with a neighboring frequency will be emitted by the local oscillator, and will thereby produce a baseband signal through interaction. This baseband signal will then be "selected" by the analog-digital converters due to their limited bandwidth 37, which attenuate the elements of the signal corresponding to higher frequencies.

Furthermore, it should be noted that in order to be effective, the present invention requires sufficiently high attenuation of the signals corresponding to the network's other wavelength channels and which are intended for other optical receivers 5. This attenuation may be brought about by wavelength selective switches (WSSs) located within the optical egress node 7, generally within the optical cross-connects (OXCs) 9.

Thus, if the attenuation of the wavelength selective switches is sufficient, it is not necessary to add a wavelength channel selection filter upstream of the coherent mixer 19.

Additionally, the embodiments of the present invention do not require that a control plane send a command to the signal retrieval device in order to adapt to a change in the wavelength of the transmission channel.

The adaptation to a signal received on a different wavelength is therefore done automatically and instantaneously because no adjustment or modification is necessary to adapt the signal retrieval device.

Thus, within the context of setting up optical protection, the embodiments of the present invention make it possible to obtain a fast and effective adaptation of the signal retrieval device when a wavelength channel of the transmitted signal is changed (for example, when switching from the working optical path to the protection optical path). Additionally, the implementation of a local oscillator emitting a frequency comb signal only requires a change or reconfiguration of the local oscillator, and consequently, requires only a low cost to achieve. Finally, by reducing the baseline signal's frequency band down to just the lines corresponding to wavelengths likely to be received by the corresponding egress node, the power needed by the local oscillator is reduced (compared to a frequency comb with a broader spectrum).

## Claims

1. A method for retrieving an optical signal transmitted over a communication network comprising a plurality of transmission wavelength channels, said method using coherent detection and comprising the following steps:
- a coherent mixing of the optical signal transmitted over a transmission wavelength and a baseline signal emitted by at least one local oscillator (17),
- a sampling of the signals derived from the coherent mixing, comprising an analog-digital conversion,
- a digital signal processing,
wherein said local oscillator (17) comprises means for generating a frequency comb whose spectral lines correspond to the wavelength of the network's transmission channels in such a way that the baseline signal comprises a spectral line corresponding to the transmission wavelengths channel of the transmitted signal.

2. A method for retrieving an optical signal according to claim 1, wherein the frequency comb generated by the local oscillator (17) comprises spectral lines corresponding to only one part of the wavelengths of the network's transmission channels.

3. A method for retrieving an optical signal according to claim 1 or 2, wherein the local oscillator (17) is a laser with a Fabry-Pérot cavity.

4. A method for retrieving an optical signal according to one of the preceding claims, wherein the filtering inherent in the analog-digital converters (37) makes it possible to retrieve the signal of the baseband (29, 35) corresponding to the beat of the transmitted signal and of the corresponding spectral line of the baseline signal.

5. A method for receiving an optical signal transmitted over a communication network comprising a plurality of transmission wavelength channels, comprising the following steps:
- a filtering of the transmitted signal by a wavelength channel transmission filter,
- a retrieval of the signal according to the retrieval method as claimed in one of the claims 1 to 3.

6. A method for receiving an optical signal according to claim 5, wherein the wavelength channel transmission filter which selects the desired range of wavelengths is a wavelength-selective switch.

7. A method for receiving an optical signal according to claim 5 or 6, wherein the wavelength channel transmission filter is located within an optical cross-connect (9) located within a node of the network.

8. A device for retrieving an optical signal transmitted over a communication network comprising a plurality of transmission wavelengths channels, said device comprising:
- a local oscillator (17) intended to produce a baseline optical signal,
- a coherent mixer (19) comprising two inputs intended to receive both the transmitted optical signal and the baseline signal, and outputs intended to transmit components of the mixed signal,
- a sampler (21) comprising photodiodes and analog-digital converters,
- a digital signal processing module (23),
wherein said local oscillator (17) comprises means for generating a frequency comb whose spectral lines are within a predefined interval around the network's transmission channel wavelengths so as to produce a beat between the transmitted signal and the baseline signal within the coherent mixer.

9. An optical node of a protection optical device, comprising an active optical path and a protection optical path, said optical paths connecting an optical emitter and an optical receiver, said optical node comprising:
- means for switching the active optical path over to the protection optical path in the event of an incident on the active optical path.
- means for retrieving a transmitted signal, comprising:
- a local oscillator (17) intended to produce a baseline optical signal,
- a coherent mixer (19) comprising two inputs intended to receive both the signal transmitted by one of the optical paths and the baseline signal, and outputs intended to transmit components of the mixed signal,
- a sampler (21) comprising photodiodes and analog-digital converters,
- a digital signal processing module (23),
wherein the local oscillator (17) comprises means for generating a frequency comb whose spectral lines are within a predefined interval around the transmission channel wavelengths of the active path and protection path so as to produce a beat between the transmitted signal and the baseline signal within the coherent mixer.

10. An optical node according to claim 9, wherein the analog-digital converters comprise filtering means making it possible to select the signal of the baseband corresponding to the beat of the transmitted signal and of the corresponding spectral line of the baseline signal.
